# EUROPEAN PATENT APPLICATION

(11) **EP 2 579 679 A2**
(43) Date of publication of application: **10.04.2013**
(21) Application number: 11792645.1
(22) Date of filing: 03.06.2011
(51) Int. Cl.: H04W 88/16, H04W 92/02, H04W 84/18

(54) **METHOD AND COMMUNICATION DEVICE FOR COMMUNICATING WITH OTHER DEVICES**

(30) Priority: 06.12.2010 US 419877 P; 23.11.2010 US 416725 P; 27.09.2010 US 386954 P; 30.08.2010 US 377990 P; 25.08.2010 US 377081 P; 14.06.2010 US 354256 P; 10.06.2010 US 353634 P; 08.06.2010 US 352800 P; 06.06.2010 US 351918 P
(71) Applicant: LG Electronics Inc., Yeongdeungpo-gu Seoul 150-721 (KR)
(72) Inventor: LEE, Jihye, Anyang-si Gyeonggi-do 431-080 (KR); DEPRUN, Jean-Francois, F-95970 Paris (FR); CHU, Younsung, Anyang-si Gyeonggi-do 431-080 (KR)
(74) Representative: Urner, Peter
(86) International application number: PCT/KR2011/004100
(87) International publication number: WO 2011/155734

(57) **Abstract**

An embodiment of the present invention relates to a method in which a communication device having a converged personal network service (CPNS) enabled entity communicates with other devices. The communication method comprises a step in which the CPNS enabled entity of the communication device, which is set to a gateway mode receives, from a first device, a discovery response message including first information which indicates that mode of the first device is set to a personal network entity (PNE) and second information which indicates whether to hide the first device in an additional discovery procedure. Here, the CPNS enabled entity manages a first network, and one or more personal network entities (PNEs) which can receive a first service through the CPNS enabled entity set to the gateway mode existing in the first network. The communication method further comprises: a step of receiving, from a second device, a discovery request message including third information which indicates the mode of the second device, in the event the communication device has moved into the coverage of the second network managed by the second device; and a step of determining whether to change mode of the CPNS enabled entity of the communication device based on at least one of the following: the presence of an available PNE among said one or more PNEs, the mode of the second device and the second information.

## Description

### [Technical Field]

The present invention relates to Converged Personal Network Service (CPNS).

### [Background Art]

From among a variety of developed technologies, the existing technology, such as DLNA or ZigBee, has placed emphasis on the search and use of the services of devices within a specific PAN. Tethering technology has placed emphasis on a connection between heterogeneous networks.

In contrast, unlike this simple PAN, a CPNS concept has been proposed.

In CPNS, devices belonging to a Personal Network (PN) (or also called a Personal Area Network (PAN)) receive several services.

This CPNS is implemented by way of a CPNS server, a CPNS gateway, and devices which support CPNS. In addition, there may be a common server and common devices.

In the CPNS, a bundle of devices is called a PN based on a personal network. The CPNS gateway is placed within the PN, the services of devices belonging to the PN are registered with the CPNS server through the CPNS gateway, a device that provides a specific service can be searched for by the CPNS server, and an external entity can share the service provided by the device based on the search.

The CPNS gateway functions to connect a PN (also called a gateway 'GW') to another network. The CPNS device is also called a Personal Network Entity (PNE). The CPNS device is a member of a PN, and several devices may be grouped into one PNE or a single device may become a PNE.

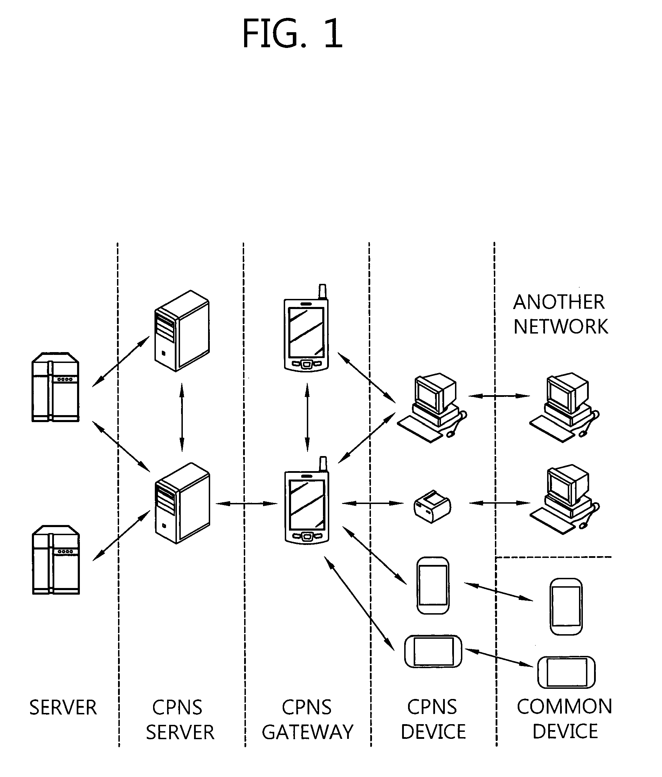

FIG. 1 is an exemplary diagram showing a concept of CPNS.

As shown in FIG. 1, common servers, CPNS servers, CPNS gateways, CPNS devices, and common devices are shown.

The CPNS server can communicate with one or more CPNS gateways (i.e., PN gateway) and transmit and receive data. Each CPNS server can exchange data by communicating with one or more CPNS devices within a PN (or called a Personal Area Network (PAN)) through the CPNS gateway.

Each of the CPNS devices can transmit and receive data to and from one or more other CPNS devices or common devices through the CPNS gateway.

The CPNS gateway can transmit and receive data by communicating with a CPNS server, a CPNS gateway belonging to another PN, or a CPNS device.

Each CPNS server can transmit and receive data by communicating with a common server and a CPNS gateway.

For example, the CPNS server and the CPNS gateway can communicate with each other over a cellular network, and the CPNS gateway and the CPNS device can communicate with each other using near-field communication, for example, Bluetooth, NFC, ZigBee, or Wi-Fi.

Meanwhile, the CPNS server manages and controls communication between the CPNS gateway and the CPNS device, and so applications and pieces of information are exchanged, thereby being capable of increasing user experience. For example, in FIG. 1, a user can obtain position information from another CPNS device (e.g., a GPS) using a specific CPNS device, send the position information to a CPNS server through the CPNS gateway, and receive position-based service from the CPNS server.

As a result, the user can be provided with various services through several CPNS devices that belong to the PN.

### [Disclosure]

### [Technical Problem]

The aforementioned conventional technology has proposed only a concept of CPNS, but has not proposed necessary technical specification in order to implement this CPNS service.

Accordingly, an object of this specification is to provide detailed technology for implementing CPNS service.

### [Technical Solution]

In order to achieve the above object, an embodiment of the present invention provides a method of communicating with other devices, which is performed by a communication device including a Converged Personal Network Service (CPNS)-enabled entity.

The communication method can include the step of the CPNS-enabled entity of the communication device, set in gateway mode, receives a discovery response message, including first information indicating that mode of a first device has been set as a Personal Network Entity (PNE) and second information indicating whether the first device should be protected in an additional discovery procedure or not, from the first device. Here, the CPNS-enabled entity can manage a first network and one or more Personal Network Entities (PNEs) capable of receiving first service through the CPNS-enabled entity set as the gateway may be present within the first network. The communication method can further include the step of receiving a discovery request message, including third information indicative of mode of a second device, from the second device if the communication device has moved within the coverage of a second network managed by the second device and the step of determining whether or not to change the mode of the CPNS-enabled entity of the communication device based on one or more of whether or not there is an available PNE from among the one or more PNEs, the mode of the second device, and the second information.

Here, if there is no PNE present outside the coverage of the second network, but the first device has been set to be protected in the additional discovery procedure, the mode of the CPNS-enabled entity may be changed from the gateway mode to combined mode.

The combined mode may be mode in which driving is performed in the gateway mode and PNE mode simultaneously.

The available PNE may be a PNE which is located within the coverage of the second network and which supports a communication method of the second network and has power enough to receive service from the second network.

The step of the determination can further include the step of the CPNS-enabled entity checking its own mode information. If, as a result of the check of its own mode information, the CPNS-enabled entity can be driven in the gateway mode and a PNE mode simultaneously, the mode of the CPNS-enabled entity may be changed into the combined mode.

If all PNEs are present within the coverage of the second network, the mode of the CPNS-enabled entity may be determined to be changed from the gateway mode to PNE mode or determined not to be changed.

The communication method can further include the step of sending a discovery response message to the second device in response to the reception of the discovery request message.

The discovery response message may include mode information indicating that the first device operates in the combined mod. Here, if it is checked that the first device should be protected in the additional discovery procedure based on the second information, the discovery response message may include information on other PNEs except the first device.

The communication method may further include the steps of the CPNS-enabled entity receiving service data of the second network from the second device as a PNE after changing into the combined mode and the CPNS-enabled entity transferring the service data to the entity as the gateway.

Meanwhile, in order to achieve the above object, an embodiment of the present invention provides a communication device. The communication device may include a storage unit for storing a Converged Personal Network Service (CPNS)-enabled entity set in gateway mode. Here, the CPNS-enabled entity may manage a first network and one or more Personal Network Entities (PNEs) capable of receiving first service through the CPNS-enabled entity set as the gateway may be present within the first network. Furthermore, the communication device may include a reception unit for receiving a discovery response message, including first information indicating that mode of a first device has been set as a PNE and second information indicating whether the first device should be protected in an additional discovery procedure or not, from the first device when the communication device is located within the first network and for receiving a discovery request message, including third information indicative of mode of a second device, from the second device after the communication device has moved within the coverage of a second network managed by the second device. Furthermore, the communication device may further include a control unit for determining whether or not to change the mode of the CPNS-enabled entity of the communication device based on one or more of whether or not there is an available PNE from among the one or more PNEs, the mode of the second device, and the second information. Here, if there is no PNE present outside the coverage of the second network, but the first device has been set to be protected in the additional discovery procedure, the mode of the CPNS-enabled entity may be changed from the gateway mode to combined mode.

### [Advantageous Effects]

An embodiment of the present invention has solved the aforementioned conventional problem. That is, an embodiment of the present invention proposes detailed technology for implement CPNS service.

### [Brief Description of the Drawings]

FIG. 1 is an exemplary diagram showing a concept of CPNS.

FIG. 2 is an exemplary diagram showing the entire CPNS procedure.

FIG. 3 shows the architecture of first and second devices shown in FIG. 2.

FIG. 4 is an exemplary diagram showing a CPNS-initial procedure.

FIG. 5 shows an example in which the PN of a user A overlaps with another PN as the user A geographically moves.

FIG. 6 is an exemplary diagram showing a signal flow of a physical connection procedure and a discovery procedure that are generated by the example shown in FIG. 5.

FIG. 7 is an exemplary diagram showing a first embodiment in which a specific device is made not to perform a paring procedure.

FIG. 8 is an exemplary diagram showing a second embodiment in which a specific device is protected in a mutual discovery procedure.

FIG. 9 is an exemplary diagram showing a third embodiment in which a specific device is protected.

FIG. 10 shows a signal flow in which mode of a CPNS-enabled entity is changed.

FIG. 11 shows a process of changing mode of a CPNS-enabled entity.

FIG. 12 shows an architecture after mode is changed.

FIG. 13 shows an example in which synchronization is adjusted after mode of a CPNS-enabled entity is changed.

FIG. 14 shows another example in which synchronization is adjusted after mode of a CPNS-enabled entity is changed.

FIG. 15 is a block diagram of a device in accordance with the embodiments of the present invention.

### [Mode for Invention]

The present invention relates to Converged Personal Network Service (CPNS). However, the present invention is not limited to the CPNS and can be applied to all communication systems and methods and other systems to which the technical spirit of the present invention can be applied.

Technical terms used in this specification are used to describe only specific embodiments, and it is to be noted that the terms are not intended to limit the present invention. Furthermore, the technical terms used in this specification should be interpreted as having meanings that are commonly understood by a person having ordinary skill in the art to which the present invention belongs, unless specifically defined in this specification, and should not be interpreted as having excessively comprehensive meanings or excessively reduced meanings. Furthermore, if the technical terms used in this specification are erroneous technical terms that do not precisely represent the spirit of the present invention, they should be replaced with technical terms that may be correctly understood by a person having ordinary skill in the art and understood. Furthermore, common terms used in the present invention should be interpreted according to the definitions of dictionaries or according to the context and should not be interpreted as having excessively reduced meanings.

Furthermore, an expression of the singular number used in this specification includes an expression of the plural number unless clearly defined otherwise in the context. In this application, terms, such as "comprise" and "include", should not be interpreted as essentially including all several elements or several steps described in the specification and should be interpreted as not including some of the elements or steps or as including additional element or steps.

Furthermore, terms including ordinal numbers, such as the first and the second used in this specification, may be used to describe a variety of elements, but the elements should not be limited to the terms. The terms are used to only distinguish one element from the other element. For example, a first element may be named a second element and likewise a second element may be named a first element without departing from the scope of the present invention.

When it is said that one element is described as being "connected" or "coupled" to the other element, it should be understood that one element may be directly connected or coupled to the other element, but a third element may be interposed between the two elements. In contrast, when it is said that one element is described as being "directly connected" or "directly coupled" to the other element, it should be understood that a third element is not interposed between the two elements.

Hereinafter, preferred embodiments according to the present invention are described in detail with reference to the accompanying drawings. The same or similar elements are assigned the same reference numerals irrespective of reference numerals, and a redundant description thereof is omitted. Furthermore, in describing the present invention, a detailed description of the known functions and constructions will be omitted if it is deemed to make the gist of the present invention unnecessarily vague. Furthermore, the accompanying drawings are provided to help easily understand the spirit of the present invention, and it is to be noted that the spirit of the present invention should not be limited by the spirit of the present invention. The spirit of the present invention should be interpreted as being extended up to all changes, equivalents to substitutes other than the accompanying drawings.

Although a terminal is illustrated hereafter, the terminal can be called User Equipment (UE), Mobile Equipment (ME), a Mobile Station (MS), a User Terminal (UT), a Subscriber Station (SS), a wireless device, a handheld device, or an Access Terminal (AT). Furthermore, the terminal can be a portable device equipped with a communication function, such as a mobile phone, a PDA, a smart phone, a wireless modem, or a notebook, or can be a not-portable device, such as a PC or a device mounted on a vehicle.

Definition of terms

Prior to a description with reference to the drawings, terms used in this specification are defined in brief in order to help understanding of the present invention.

1) Converged Personal Network Service (CPNS): CPNS enables devices to belong to a Personal Network (PN) (or also called a Personal Area Network (PAN)) and to receive several services. When comparing this CPNS with common tethering service, tethering service is technology for allowing a device that has simply accessed the Internet to allocate a private IP address to a different device using NAT technology so that the different device can access the Internet using the private IP address. In contrast, in CPNS, a first device of a user allocates a private IP address to other devices and also integrates and manages several services that can be provided over a mobile communication network. When several services are integrated and managed by the first device of the user as described above, the services can be shared between several devices of users seamlessly. For example, a first device of a user uses video on demand (VoD) and can transfer the VoD to a second device seamlessly. Accordingly, user convenience can be increased. Furthermore, in CPNS, when the user owns several devices, an external server can determine that service data must be transmitted to which one of the several devices when the external server tries to transfer the service data to the user even when there is no request from the user. For example, in the case where a user owns several devices capable of video telephony, when the user receives a video call request, an external server can determine that the video telephony call must be transferred to which one of the several devices. Furthermore, in CPNS, the video call that is in progress can be transferred to another device of the user seamlessly. This CPNS is achieved by a CPNS-enabled entity that is included in a device of a user.

2) a CPNS-enabled entity: the CPNS-enabled entity is a logical entity, and the CPNS-enabled entity can include three types. That is, a PNE, a PN GW, and a CPNS server can be present. A CPNS server entity is placed within a core network, and a PNE and a PN GW are placed within CPNS device.

3) a CPNS device: the CPNS device can operate in several modes at the same time within a personal network. The CPNS device has a function of processing, storing, and playing content. Furthermore, the CPNS device can have a communication interface that enables other CPNS device to operate in different modes within a personal network.

4) a CPNS server: The CPNS server is a function entity capable of providing resources to CPNS entities in response to a request or in a push manner. The CPNS server registers devices and user-related services, stores corresponding information, and provides the registration of a PN, that is, a bundle of devices, and the registration of a service group including a PN and a WAN. Furthermore, the CPNS server can communicate with external entities, such as a content providing server. The CPNS server is the subject that sets a key for authenticating a device owned by a user in order to perform service over a CPNS framework. Furthermore, the CPNS server registers externally provided services and supports searches and/or consumption/providing requests so that device can consume the services.

5) a Personal Network (PN): the PN is a set of devices that enable users to consume or generate services. All devices within the PN can be connected to a PN GW. The PN can be changed over time. The PN can include a device at least operating in GW mode and a different device operating as a PNE.

6) a PNE: the PNE is an abbreviation of a Personal Network Element and is a member that forms a PN. The PNE can consume or provide service or content. The PNE is the subject that consumes actual content, applications, and service. The PNE is the subject that is a member when producing a PN within a CPNS framework and forming a service group.

7) a PN GW: the PN GW is an abbreviation of a Personal Network Gateway and is an entity that is present within a PN and a wide area network. The PN GW can generate a PN that provides CPNS service. Furthermore, the PN GW is responsible for a connection with a heterogeneous network for a device that is present within a PN, but is unable to perform an external connection. The PN GW registers a CPNS server for connected devices and manages inventories.

A PN GW within a device allows not only a PNE present within a PN, but also another device to be connected to a CPNS server. A PN GW present within a device uses a global network, such as a mobile network. Furthermore, a PN GW manages service with PNEs and manages communication and pieces of other function information.

8) a PN inventory: the PN inventory is a list of PNs, PNs belonging to several PNs, and devices.

9) a service group: The service group is a set of PNEs and a PN GW that share services, data, and applications. The service group refers to a bundle of devices that are registered with a server through a generated PN. Here, all devices, that is, members of a service group, do not need to be dependent on one PN, and the devices include devices which are spaced apart from one another because they belong to several PNs and cannot be connected. Furthermore, the devices do not need to be devices owned by the same user.

10) a zone: the zone refers to a specific area zone.

11) zone-based service: the zone-based service refers to a CPNS service that is provided within the coverage of a zone-based PN GW.

12) a zone PN GW: the zone PN GW is a PN GW that provides unique service or content within a zone.

13) Mode of a CPNS-enabled entity: CPNS device can operate as a PN GW in PNE mode. The mode can be checked between devices through a CPNS entity discovery function. A PN has to include at least a device operating as a PN GW and a PNE operating as a PNE. A PNE and a PN GW have to know mutual modes in order to generate or participate in a PN. A PN GW has to be able to identify a PNE in order to produce a member of a PN. Furthermore, a PNE has to know a PN GW in order to generate a PN newly or participate in the existing PN.

If there are devices (e.g., an MP3 player and a smart meter) that support only PNE mode, the devices operate only in PNE mode. If a device can operate as only a PN GW, the device operates as a PN GW. If a device can operate as any one of a PN GW and a PNE, the mode of the device can operate as one of the PN GW and the PNE according to a previously stored configuration value and can be changed depending on user setting or service provider setting.

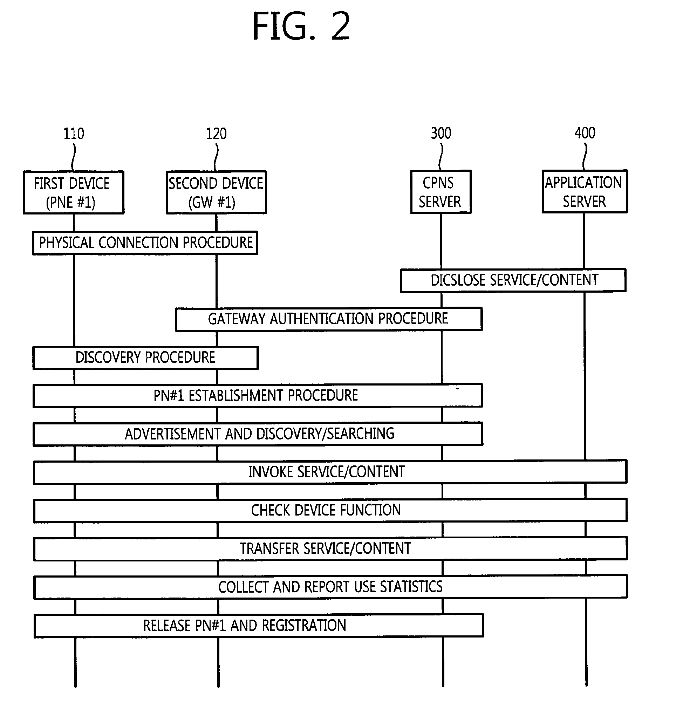

FIG. 2 is an exemplary diagram showing the entire CPNS procedure.

As can be seen with reference to FIG. 2, a first device 110, a second device 120, a CPNS server 300, and an application server 400 are shown.

The first and the second devices 110 and 120 are devices owned by a user A. The first device 110 is a cellular phone of the user A and can be equipped with a first transceiver for connecting to the CPNS server 300 over a mobile communication network. Furthermore, the first device 110 can include a second transceiver, such as Bluetooth, Wi-Fi, or ZigBee, so that it can form a personal network. The second device 120 is a portable multimedia device of the user A. The second device 120 does not include a first transceiver capable of communication with a mobile communication network and can include only a second transceiver, such as Bluetooth, Wi-Fi, or ZigBee capable of forming a personal network.

The first and the second devices 110 and 120 can include CPNS-enabled entities. Each of the CPNS-enabled entities can operate in gateway mode or Personal Network Entity (PNE) mode. FIG. 2 illustrates that the second device 120 operates as a gateway because it includes a first transceiver capable of a connection over a mobile communication network.

The first device 110 and the second device 120 first perform a physical connection procedure through the second transceivers when they are located at a long distance. Meanwhile, the application server 400 registers service and content with the CPNS server 300 or advertises the service and content. Furthermore, the CPNS server 300 performs a procedure of authenticating the second device 120 that operates as the gateway.

Meanwhile, when the first device 110 and the second device 120 complete the physical connection procedure, the CPNS-enabled entities of the first device 110 and the second device 120 perform procedures of searching for them.

When the searches are completed, the devices configure PN#1. Here, information on the PN#1 is registered with the CPNS server 300.

When the configuration of the PN#1 is completed, the CPNS server 300 advertises its own services to the devices within the PN#1 or performs a procedure of searching for services that can be provided by the devices within the PN#1.

When a specific device within the PN#1 invokes specific service or content among the advertised services, a procedure of checking the function of the specific device is performed and the specific service or content is transferred to the specific device according to the checked function.

When the specific device uses the specific service or content, use statistics are gathered and reported to the CPNS server 300 or the application server 400.

Meanwhile, if the PN#1 is no longer necessary, the PN#1 is released and information on the PN#1 can be deregistered from the CPNS server 300.

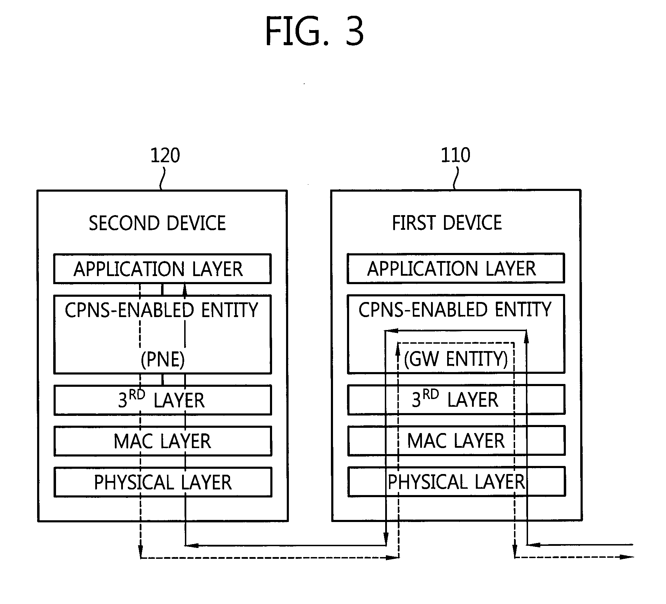

FIG. 3 shows the architecture of the first and second devices shown in FIG. 2.

As can be seen with reference to FIG. 3, a physical layer, an MAC layer, a 3^{rd} layer, a CPNS-enabled entity, and an application layer are present in each of the first and the second devices 110 and 120. Here, the CPNS-enabled entity of the second device 120 operates in PNE mode, and the CPNS-enabled entity of the first device 110 drives only a gateway entity. In contrast, the CPNS-enabled entity of the first device 110 drives a gateway entity.

Accordingly, as indicated by a thick solid line in FIG. 3, service data is transferred to the gateway entity within the CPNS-enabled entity of the first device 110 via the physical layer, the MAC layer, and the 3^{rd} layer of the first device 110. When the gateway entity of the first device 110 receives the service data, the service data is transferred to the second device 120 via the CPNS-enabled entity, the 3^{rd} layer, the MAC layer, and the physical layer of the first device 110.

In the second device 120, the PNE of the CPNS-enabled entity receives the service data via the physical layer, the MAC layer, and the 3^{rd} layer.

Meanwhile, the PNE within the CPNS-enabled entity of the second device 120 sends a control message, such as a request message or a response message, to the first device 110 via the 3^{rd} layer, the MAC layer, and the physical layer.

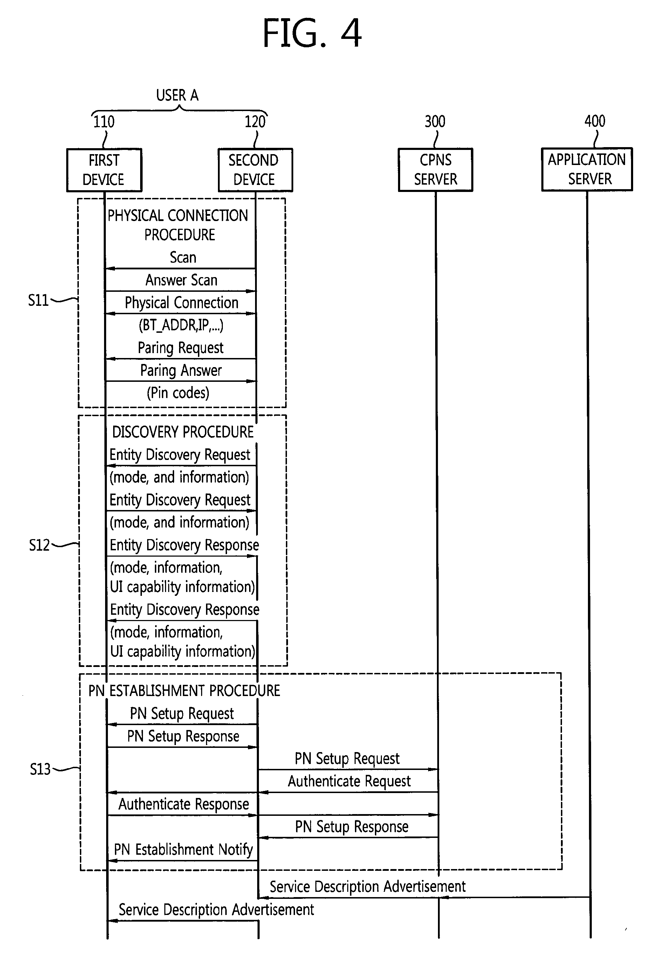

FIG. 4 is an exemplary diagram showing a CPNS-initial procedure.

As can be seen with reference to FIG. 4, a paring procedure S11 corresponding to a physical connection procedure, an entity discovery procedure S12, and a PN establishment procedure S13 are performed.

First, the paring procedure S11 is described. In the state in which there is no connection between the devices of a user A, a physical connection is initiated between the shown devices.

To this end, a second device 120 starts scan. To this end, the second device can send a scan message to the first device 110. The first device 110 sends a scan response message to the second device 120 in order to respond to the scan. In response thereto, a procedure for a physical connection is initiated and pieces of information for the physical connection, for example, an address and an IP address are exchanged between the first device and the second device. After the pieces of information are exchanged, the second device sends a physical connection request message, for example, a paring request message to the first device. The first device receives a pin code from the user and sends a connection request response message including the pin code, for example, a paring response message to the second device. If the pin code is correct, the physical connection procedure is completed.

Meanwhile, when the physical connection is completed, each of the CPNS-enabled entities within the devices performs a procedure for discovering them, that is, the entity discovery procedure S12.

Concretely, first, the CPNS-enabled entity of the second device 120 sends a discovery request message, for example, an entity discovery request message to the first device 110. The discovery request message, for example, the entity discovery request message includes information on mode of the CPNS-enabled entity within the second device and information on the CPNS-enabled entity and other devices previously retrieved. Here, if the CPNS-enabled entity within the second device is set as a gateway, the mode information can include information indicative of the gateway.

Meanwhile, the CPNS-enabled entity of the first device 110 also sends a discovery request message, for example, an entity discovery request message to the second device 120. Likewise, the discovery request message, for example, the entity discovery request message includes information on mode of the CPNS-enabled entity within the first device 110 and information on the CPNS-enabled entity and other devices previously retrieved. Here, if the CPNS-enabled entity within the first device is set as a Personal Network Entity (PNE), the mode information can include information indicting the PNE.

In response to the discovery request message received from the second device, the CPNS-enabled entity of the first device 110 sends a discovery response message, for example, an entity discovery response message to the second device 120. The discovery response message, for example, the entity discovery response message includes the mode information, the information on the CPNS-enabled entity and other devices previously retrieved, and information on a UI function.

Likewise, in response to the discovery request message received from the first device, the CPNS-enabled entity of the second device 120 sends a discovery response message, for example, an entity discovery response message to the first device 110.

When the discovery procedure is completed by the above signals, the PN establishment procedure S13 is performed.

Concretely, if the CPNS-enabled entity of the second device 120 is set as a gateway, a PN setup request message is transmitted to a device set as a PNE, for example, the first device 110. Here, the PN setup request message can include information on the gateway and information on entities to be included in a PN that will be generated (e.g., a CPNS-enabled entity within the first device).

When the CPNS-enabled entity of the first device sends a PN setup response message to the second device, the CPNS-enabled entity of the second device 120 sends a PN setup request message to the CPNS server 300.

When the PN setup request message is received, the CPNS server 300 sends an authentication request message to the first device through the second device 120 that operates as the gateway. In response to the authentication request message, the first device sends an authentication response message to the CPNS server 300 through the second device that operates as the gateway.

When the authentication response message is received, the CPNS server 300 sends the PN setup response message to the second device 120 that operates as the gateway.

In response thereto, the CPNS-enabled entity of the second device 120 that operates as the gateway sends a PN establishment-complete notify message to the first device.

When the establishment of the PN is completed by the transmission and reception of the messages, the application server 400, such as a content server, can transfer a service description advertisement message, including information on its own service, to the second device 120, that is, the gateway, through the CPNS server 300. In response thereto, the second device 120, that is, the gateway, transfers the service description advertisement message to devices that belong to the PN managed by the second device 120.

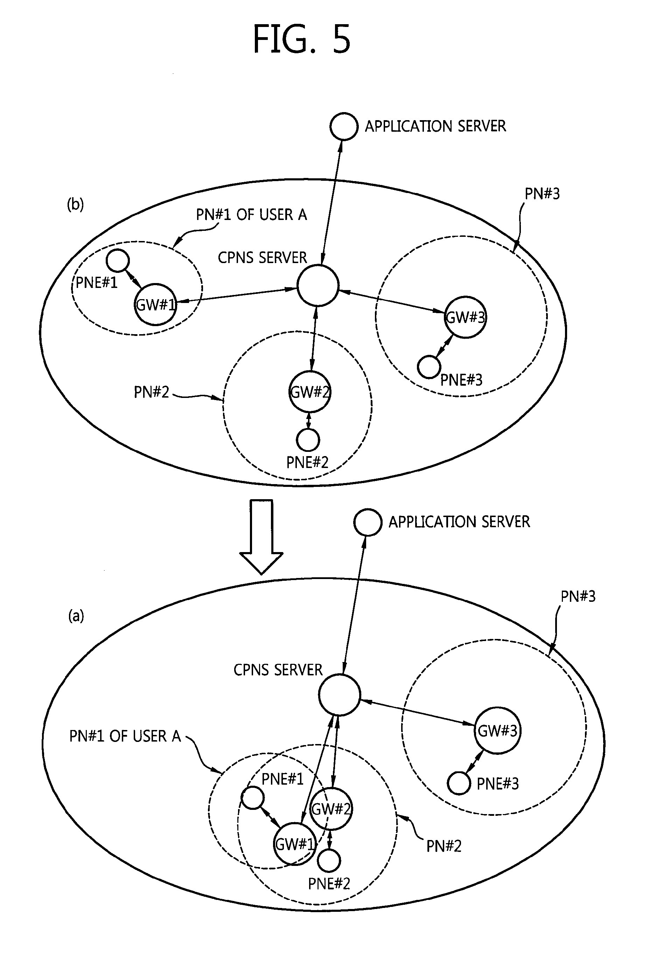

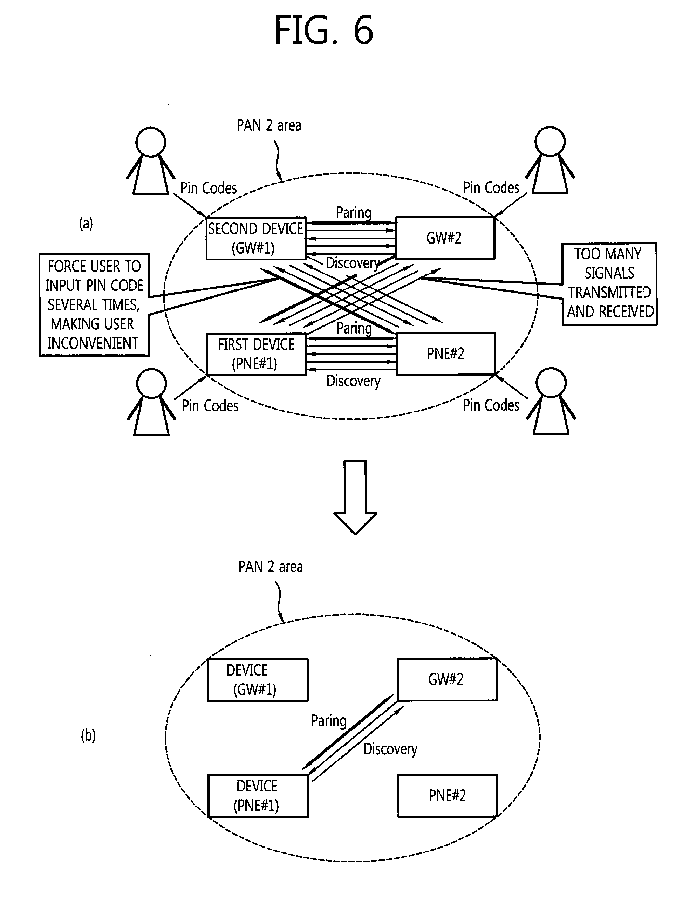

FIG. 5 shows an example in which the PN of a user A overlaps with another PN as the user A geographically moves, and FIG. 6 is an exemplary diagram showing a signal flow of a physical connection procedure and a discovery procedure that are generated by the example shown in FIG. 5.

First, FIG. 5(a) illustrates three PNs, a CPNS server, and an application server. The PN#1 of the three PNs has been generated by the user A. The PN#1 includes the devices of the user A and can include, for example, a GW#1 and a PNE#1 as shown. It is here assumed that the GW#1 is a cellular phone of the user A and the PNE#1 is a portable multimedia device of the user A. The PN#2 includes a GW#2 and a PNE#2, and the PN#3 includes a GW#3 and a PNE#3. The application server can provide service to the PNEs with the respective PNs through the CPNS server and the GW#1, the GW#2, and the GW#3.

Meanwhile, it is assumed that the user A has geographically moved and moved within the coverage of the PN#2 in the state in which the user A carries the GW#1, as shown in FIG. 5(b).

Meanwhile, it is assumed that the user A has geographically moved and moved within the coverage of the PN#2 in the state in which the user A carries the GW#1 and the PNE#1, as shown in FIG. 5(b).

In this case, the PN#1 formed of the GW#1 and the PNE#1 of the user A overlaps with the PN#2. That is, the GW#1 and the PNE#1 that belong to the PN#1 of the user A are included within the coverage of the PN#2.

Meanwhile, if the GW#1 and the PNE#1 belonging to the PN#1 of the user A are included within the coverage of the PN#2 as described above, a paring procedure and an entity discovery procedure are performed again as shown in FIG. 6(a).

Concretely, as shown in FIG. 6(a), the first device of the user A performs pairing and discovery procedures with the GW#2, and the second device of the user A performs pairing and discovery procedures with the GW#2. Here, in order to perform the paring procedures, the user A has to inconveniently input a pin code several times. Furthermore, for the discovery procedures, four signals are transmitted and received as shown in FIG. 2. A total of 16 messages are transmitted and received because the discovery procedures are performed four times, thereby adding complexity.

Accordingly, it is necessary for a specific device not to perform a paring procedure and a discovery procedure as shown in FIG. 6(b).

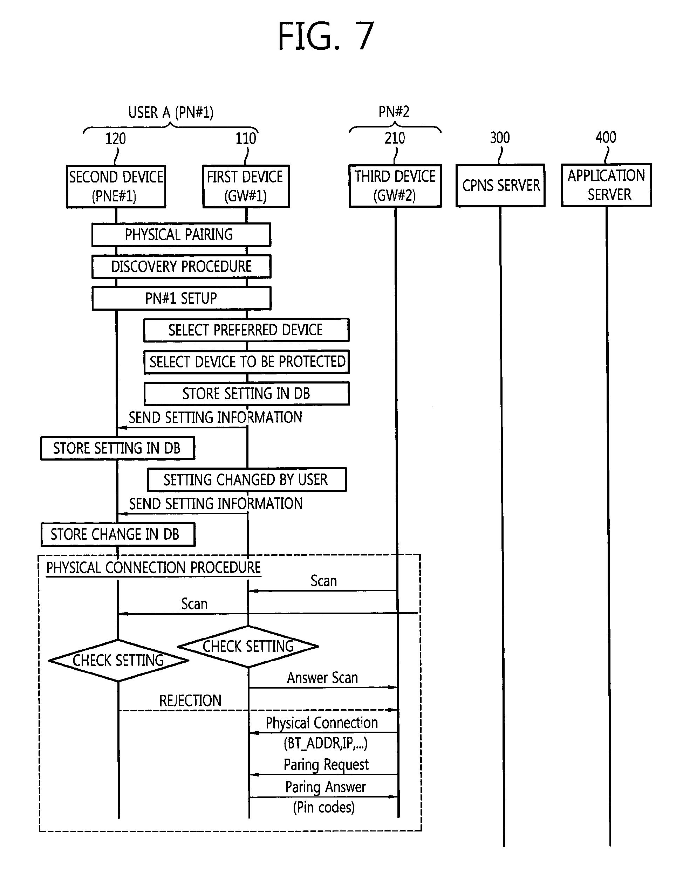

A procedure for preventing a specific device to perform a paring procedure and a discovery procedure is described with reference to FIGS. 7 to 9.

FIG. 7 is an exemplary diagram showing a first embodiment in which a specific device is made not to perform a paring procedure.

As can be seen with reference to FIG. 7, in the first embodiment, a user can select or modify a preferred device and a device to be protected in a subsequent physical connection procedure.

Concretely, as can be seen with reference to FIG. 7, a user A owns a second device 120 operating as a PNE and a first device 110 operating as a gateway. It is here assumed that the second device 120 is a portable multimedia device and the first device 110 is a cellular phone.

First, when the first device 110 and the second device 120 are located a short way off, a physical connection procedure is performed. Next, a mutual discovery procedure is performed between the first device 110 and the second device 120, and a PN#1 establishment procedure is performed.

Next, the user A selects a device preferred for a subsequent physical connection with another device, from devices belonging to the PN#1 using the first device 110 and inputs the selected device. Or, the user A selects a device to be protected when performing a subsequent procedure for a physical connection with another device using the first device 110. When the selection is completed, the first device 110 stores information on the configuration by the user in a database and sends the information on the configuration to the second device 120. The second device 120 stores the information on the configuration in the database.

Meanwhile, the user A can change the configuration using the first device 110. When the configuration is changed, the first device 110 can send information on the changed configuration to the second device 120.

An example in which the user A performs the selection and the change using the first device 110 has been described, but may perform the selection and change through the second device 120. Furthermore, the user A can access a CPNS server 300 and perform a configuration using a different device not the first device and the second device. In this case, the CPNS server 300 can send information on the configuration to the first device 110 and the second device 120.

After the configuration is completed as described above, it is assumed that the user A has moved to a PN#2 in the state in which the user A carries the first device 110 and the second device 120. In this case, a third device 210 belonging to the PN#2 can send a scan message to the first device 110 and the second device 120 in order to scan the first device 110 and the second device 120. When the scan message is received, each device can check its own configuration and determine whether or not to respond to the scan message. If the first device 110 is checked as a preference device based on a configuration value, the first device 110 sends a scan response message, for example, an answer scan message to the third device 210 and performs a physical connection procedure. If the second device 120 is checked as a protected device based on the configuration value, the second device 120 may disregard the scan message and do not send a scan response message or may send a message indicative of rejection.

In accordance with the first embodiment described above, a user can select a preferred device and a device to be protected in a subsequent physical connection procedure, and thus lots of unnecessary physical connection procedures can be prevented from being executed.

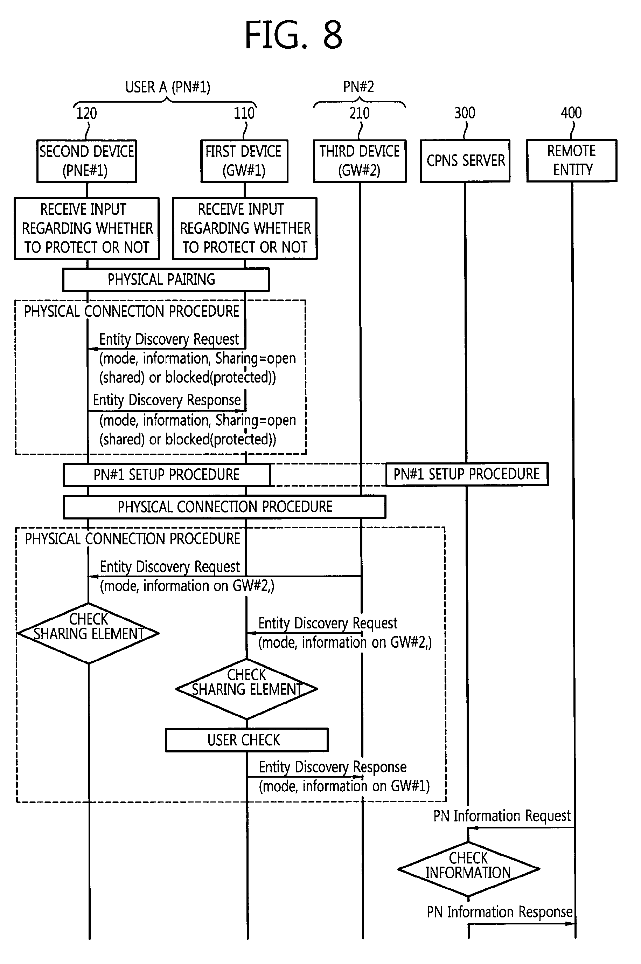

FIG. 8 is an exemplary diagram showing a second embodiment in which a specific device is protected in a mutual discovery procedure.

As can be seen with reference to FIG. 8, in the second embodiment, a user may select or modify a device to be protected in a subsequent mutual discovery procedure.

Concretely, as can be seen with reference to FIG. 8, a user A owns a second device 120 operating as a PNE and a first device 110 operating as a gateway. It is here assumed that the second device 120 is a portable multimedia device and the first device 110 is a cellular phone.

First, the user A selects a device to be protected in a mutual discovery procedure that is subsequently performed.

When the first device 110 and the second device 120 are located a short way off, they perform a physical connection procedure.

Next, when the physical connection is completed, a mutual discovery procedure is performed between the first device 110 and the second device 120. Concretely, first, a CPNS-enabled entity within the first device 110 sends a discovery request message right after the physical connection is completed if its own mode is set as a gateway. Here, if the CPNS-enabled entity within the first device 110 does not send the discovery request message first, but both the CPNS-enabled entities within the first device 110 and the second device 120 send the discovery request messages at the same time, pieces of information can overlap with each other.

In order to prevent, the first device 110 operating as a gateway first sends the discovery request message right after the physical connection is completed.

The discovery request message, as shown, can include information on mode of the first device and information on the first device. Furthermore, as described above, the discovery request message can include an element indicating that information must be protected, for example, a Sharing element depending on user setting. That is, when a user makes a choice so that the gateway and all PNEs within a PN are shared, a value indicative of 'open' or 'shared' can be set in the Sharing element. When a user makes a choice so that only information on the gateway is shared, a value indicative of 'blocked' or 'protected' can be set in the Sharing element.

Concretely, the discovery request message can include the following elements.

- Entitylnfo element: It includes information on a CPNS-enabled entity that sends a discovery request message.

- UserInfo element: It includes information on the user of a CPNS-enabled entity that sends a discovery request message. The information on the user can include a user ID lower element and a user name lower element.

- PNEID element (or attribute): It is the ID of a PNE when a CPNS-enabled entity that sends a discovery request message is the PNE.

- PN GW ID element (or attribute): It is the ID of a GW when a CPNS-enabled entity that sends a discovery request message is a PN GW.

- PNE Name or PN GW Name element: It is the name of a PNE when a CPNS-enabled entity that sends a discovery request message is the PNE or it is the name of a GW when a CPNS-enabled entity that sends a discovery request message is a PN GW.

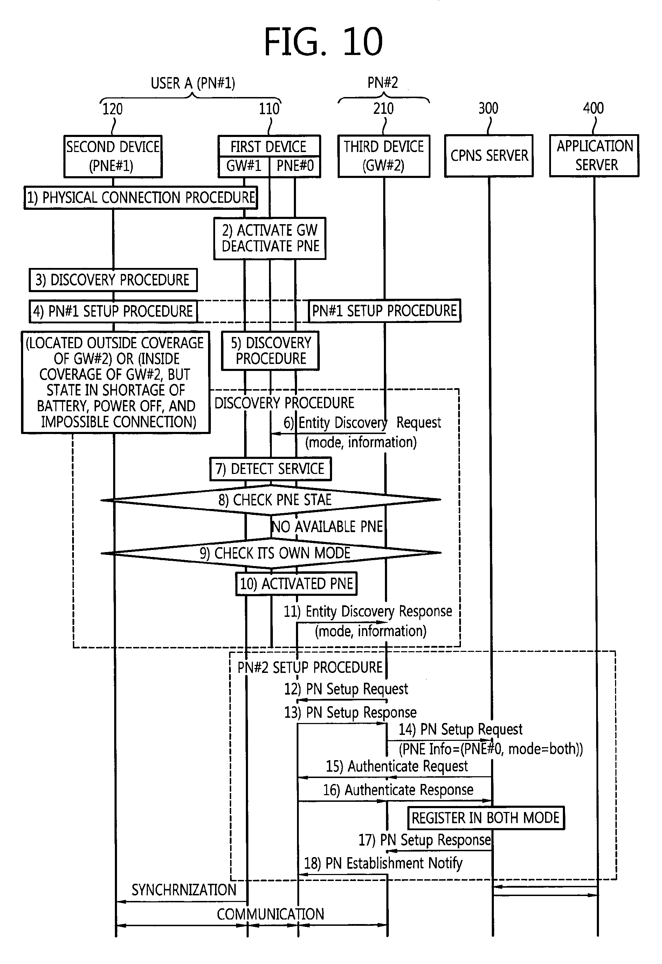

- Mode element (or attribute): It is information on activated mode of a CPNS-enabled entity that sends a discovery request message, and the information has a value indicative of a PNE or a PN GW. If activated mode of the CPNS-enabled entity is a PNE, it has a value of 1. If activated mode is a PN GW, it has a value of 2. In FIG. 10, a value of 2 is included because the CPNS-enabled entity of a third device has been set as a gateway.

- PN Info Req element (or attribute): It has a true value or false value, and a true value is included in the PN Info Req element (or attribute) when a CPNS-enabled entity that sends a discovery request message wants to obtain information on a PN stored by an entity that will receive the discovery request message.

- UI Capabilities element (or attribute): It has a true value when a PN GW has to perform a user interaction instead of a PNE. The UI Capabilities element (or attribute) is set by a PNE. For example, when a PNE does not have a user interface, the UI Capabilities element (or attribute) can be set as a true value if a PN GW instead has to perform an interaction with a user.

- Zone based service support element (or attribute): It is set as "true" when a PN GW can provide zone-based service.

- PN Info element: It is an element that is included when a CPNS-enabled entity that sends a discovery request message is a PN GW. The PN Info element includes a PN ID lower element, a description lower element, a sharing lower element, a PNE Info lower element, etc. If a PN is already present, the PN ID lower element indicates an ID for the PN. The sharing lower element indicates whether information on other PNEs belonging to a PN will be protected and only information on a PN GW will be transferred depending on user setting. If the value of the sharing lower element is set to 1, information on PNEs can be included in the PNE Info lower element. If the value of the sharing lower element is set to 2, however, information on PNEs may not be included in the PNE Info lower element. Meanwhile, if a PN is already present, the PNE Info lower element includes information on a PNE that belongs to the PN. The PNE info lower element includes a PNE ID element and a PNE Name element.

The discovery request message can be transmitted in a broadcast manner.

The above-described discovery request message can be the same as Table 1 below.

Table 1

| ELEMENT | DESCRIPTION | | | |
|---|---|---|---|---|
| UserInfo | Includes UserID and UserName. | | | |
| | UserID | ID of a CPNS user | | |
| | UserName | Name of a CPNS user | | |
| EntityInfo | It is an abbreviation of entity information and it can include PNEID, PNGWID, Name, Mode, PN Info Req, UI Capa, Zone based service support, and Broadcast group key delivery support element. | | | |
| | PNEID | ID of a PNE | | |
| | PNGWID | PN ID of a GW | | |
| | Name | name of PNE or PN GW | | |
| | Mode | Mode of the subject that performs transmission. If a PNE performs transmission, mode has a value of 1. If a PN GW performs transmission, mode has a value of 2. If a PNE and a GW can operate at the same time, mode has a value of 3. | | |
| | PNInfoReq | It is set as tree when PN Info is requested if a PNE sends message. | | |
| | UICapa | It is set as true if a PN GW interacts with a user because a device operating as a PNE does not have a user interface. | | |
| | Zone based service support | It is set as true if a PN GW provides zone-based service. | | |
| PN Info | It includes information on a PN so that a PNE can join the PN if the subject that sends a discovery request message is a PN GW and has the PN. PN Info can include a PN ID, Description, and PNE Info lower element. | | | |
| | PNID | ID of a PN | | |
| | Description | Description of PN | | |
| | Sharing | Whether PN inventory is shared or not 1: indicates shared. That is, both information on a PN GW and information on a PNE are shared 2: Protected. That is, only information on a PN GW is shared, but information on a PNE is not shared. | | |
| | PNE Info | It includes information on PNEs, that is, members of a PN. It can include a PNEID and a PNE Name as lower elements. It can also include Device Info as a lower element. | | |
| | | PNEID | ID of a PNE | |
| | | PNEName | Name of a PNE | |
| | | Device Info | It is information on a device. It can include Mode element and InactiveMode. | |
| | | | Mode | It can include information on mode that is now activated. |
| | | | Inactive Mode | It includes information on deactivated mode. |

Meanwhile, when the second device 120 receives the discovery request message, it checks the discovery request message. Furthermore, the second device 120 stores elements within the discovery request message. In particular, the second device 120 generates an PN inventory using the PNE Info element and stores the PN inventory.

Furthermore, if mode of the first device 110 is checked as a gateway based on the discovery request message, the second device 120 determines not to send an additional discovery request message and generates a discovery response message.

The discovery response message, as shown, can include information on mode of the second device and information on the second device. Furthermore, the discovery response message can include an element, for example, a Sharing element indicating whether the PN inventory should be protected or not depending on user setting, as described above. That is, when a user makes a choice so that the gateway and all PNEs within a PN are shared, a value indicative of 'open' or 'shared' can be set in the Sharing element. When a user makes a choice so that only information on the gateway is shared, a value indicative of 'blocked' or 'protected' can be set in the Sharing element.

Concretely, the discovery response message can include the following elements.

- Entity Info element: It is information on a CPNS-enabled entity that has received a discovery request, and the Entity Info element includes a user ID lower element and a user name lower element.

- PNE ID element: It includes the ID of a PNE when a CPNS-enabled entity that has received the discovery request is the PNE.

- PNE Name element: It includes the name of a PNE when a CPNS-enabled entity that has received the discovery request is the PNE.

- Mode element: It is set as both modes or combined mode.

- UI Capa element: It has a true value when a PN GW performs a user interaction instead of a PNE. The UI Capa element is set by a PNE. For example, if a PNE does not have a user interface and a PN GW instead performs a user interaction with a user, the UI Capa element can be set to a true value.

- PN Info element: If the value of a PN Info Req element within the received discovery request message is set as true, the PN Info element is included. The PN Info element includes a PN ID lower element, a description lower element, a sharing lower element, a PNE Info lower element, etc. If a PN is already present, the PN ID lower element indicates an ID for the PN. The sharing lower element indicates whether information on other PNEs belonging to a PN will be protected and only information on a PN GW will be transferred depending on user setting. If the value of the sharing lower element is set to 1, information on PNEs can be included in the PNE Info lower element. If the value of the sharing lower element is set to 2, however, information on PNEs may not be included in the PNE Info lower element. Meanwhile, if a PN is already present, the PNE Info lower element includes information on a PNE that belongs to the PN. The PNE info lower element includes a PNE ID element and a PNE Name element.

- PNE Info element: It includes information on members of a PN.

The above-described discovery response message can be the same as Table 2 below.

Table 2

| ELEMENT | DESCRIPTION | | |
|---|---|---|---|
| UserInfo | Include UserID and UserName. | | |
| | UserID | **ID** of a user | |
| | UserName | Name of a user | |
| EntityInfo | It is an abbreviation of entity information and it can include PNEID, PNGWID, Name, Mode, PN Info Req, and UI Capa element. | | |
| | PNEID | ID of a PNE | |
| | PNGWID | ID of a PN GW | |
| | Name | Name of a PNE or PN GW | |
| | Mode | Mode of the subject that sends a discovery response message. It has a value of 1 when a PNE sends the discovery response message and a value of 2 when a PN GW sends the discovery response message. If the subject can operate as a PNE and a GW at the same time, mode has a value of 3. | |
| | UICapa | It is set as true if a PN GW interacts with a user because a device operating as a PNE does not have a user interface. | |
| PN Info | Information on a PN is included if the subject that sends a discovery response message is a PNE and the PNE already participates in another PN. PN Info can include a PN ID, Description, and PNE Info lower element. | | |
| | PNID | ID of a PN | |
| | Description | Description of a PN | |
| | Sharing | Whether PN inventory is shared or not. 1: indicates shared. | |
| | | That is, both information on a PN GW and information on a PNE | |
| | | are shared. 2: Protected. That is, only information on a PN | |
| | | GW is shared, but information on a PNE is not shared | |
| | PNEInfo | It includes information on PNEs, that is, members of a PN. It can include a PNEID and a PNE Name as lower elements. It can also include Device Info as a lower element. | |
| | | PNEID | ID of a PNE |
| | | PNEName | Name of a PNE |
| | | DeviceInfo | It is information on a device. It can include a Mode element and InactiveMode. |
| | | Mode | It can include information on mode that is now activated. |
| | | InactiveMode | It includes information on deactivated mode. |

Meanwhile, when the first device 110 receives the discovery response message, it checks the discovery response message. Furthermore, the first device 110 stores elements within the discovery response message. In particular, the first device 110 generates PN inventory using the PNE Info element and stores the PN inventory.

When the mutual discovery procedure is completed, the first device 110 and the second device 120 perform a PN establishment procedure. In the PN establishment procedure, the first device 110 operating in gateway mode performs the registration of the PN#1 with a CPNS server 300. The CPNS server 300 stores information on the PN#1 I the PN inventory and stores the PNE Info element. Here, the PNE Info element includes a sharing lower element as described above.

Meanwhile, it is assumed that the user A has geographically moved and moved within the coverage of the PN#2 in the state the user A carries the first device 110 and the second device 120.

Thus, the first device 110 and the second device 120 perform physical connections with the third device 210.

When the physical connections are completed, a CPNS-enabled entity within the third device 210 sends a discovery request message to the first device 110 and the second device 120 right after the physical connections are completed if mode of the CPNS-enabled entity is set as a gateway.

When the second device 120 receives the discovery request message, the second device 120 checks its own user setting, for example, a Sharing element. If information on a PNE, for example, information on the second device 120 has been set to be protected in the user setting, for example, the Sharing element, the second device 120 may not send a response message for the discovery request message, for example, a discovery response message. Or, the second device 120 may send the discovery response message including only information on the first device, that is, a gateway.

Likewise, when the first device 110 receives the discovery request message, it checks its own user setting, for example, a Sharing element. If information on a PNE, for example, information on the second device 120 has been set to be protected in the user setting, for example, the Sharing element, the first device 110 can selectively request a user to check the user setting. That is, the first device 110 can receive an input, regarding whether the information will be shared after releasing the protection, from the user. If it is checked that the information on the PNE, for example, the information on the second device 120 is protected, the first device 110 can send a discovery response message including only its own information because it is a gateway GW.

Meanwhile, a remote entity 500 desires to provide service to the devices of the user A. The remote entity 500 sends a message, requesting information on the PN of the user A, to the CPNS server 300 because it does not know that the user A owns what devices. The CPNS server 300 checks the PN inventory and the PNE Info element stored as described above. Concretely, the CPNS server 300 can check the Sharing element and send a PN information response message including only the information on the first device 110, that is, a gateway, if, as a result of the check, information on a PNE, for example, information on the second device 120 has been set to be protected.

As described above, in the second embodiment, a user can select or modify a device to be protected in a subsequent mutual discovery procedure.

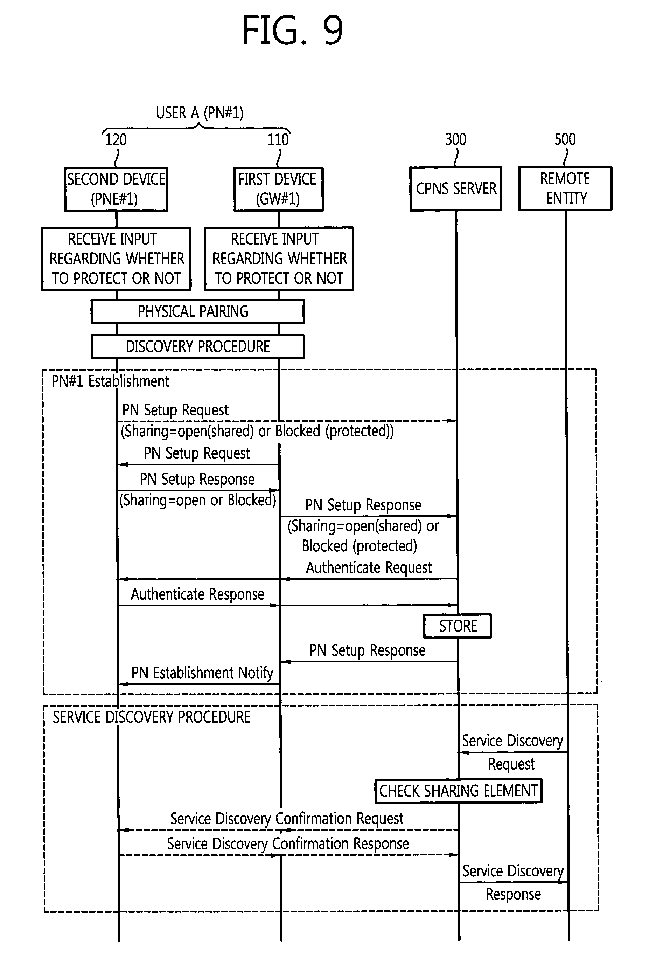

FIG. 9 is an exemplary diagram showing a third embodiment in which a specific device is protected.

As can be seen with reference to FIG. 9, in the third embodiment, a user can select or modify a device to be protected in a subsequent service discovery procedure.

Concretely, as can be seen with reference to FIG. 9, a user A owns a second device 120 operating as a PNE and a first device 110 operating as a gateway. It is here assumed that the second device 120 is a portable multimedia device and the first device 110 is a cellular phone.

First, the user A selects a device to be protected in a service discovery procedure that is subsequently performed by a user.

When the first device 110 and the second device 120 are located a short way off, they perform a physical connection procedure.

Next, when the physical connection is completed, a mutual discovery procedure is performed between the first device 110 and the second device 120.

When the mutual discovery procedure is completed, a PN establishment procedure is performed. Here, the PN establishment procedure may be first performed by the second device 120, that is, a PNE, and may be first performed by the first device 110.

If the second device 120 first starts the PN establishment procedure, the second device 120 sends a PN setup request message to a CPNS server 300 through the first device 110. Here, the PN setup request message can include a Sharing element. That is, if a user makes a choice so that the gateway and all PNEs within a PN are shared, a value indicative of 'open' or 'shared' can be set in the Sharing element. When a user makes a choice so that only information on the gateway is shared, a value indicative of 'blocked' or 'protected' can be set in the Sharing element.

Meanwhile, if the first device 110 first starts the PN establishment procedure, the first device 110 sends a PN setup request message to the second device 120. Here, the PN setup request message can include information on the gateway and information on entities (e.g., a CPNS-enabled entity within the first device) that will belong to a PN to be generated. Furthermore, the PN setup request message can include the above-described Sharing element.

The PN setup request message can be the same as Table 3 below.

Table 3

| ELEMENT | | DESCRIPTION | | |
|---|---|---|---|---|
| Origin Entity ID | | ID of a CPNS-enabled entity that tries to set up a PN | | |
| PN Setup Type | | It indicates how PN should be set up. 1: a PN GW and a PNE are included in a one-to-one manner. 2: A PNE sets up a PN with all devices connected to a PN GW. 3: A PN is set up with only specific invited PNEs. | | |
| Invited PNE ID | | It includes the IDs of PNEs to be invited during a PN setup process. | | |
| PN Info | | It is information on a PN that will be registered and stored in a CPNS server and can include PNID, Description, Disclosure, Ownership Entity, PN GW Info, and PNE Info element. | | |
| | | PN ID | Indicate the ID of a PN. | |
| | | Description | Description (e.g., home, office) of a PN | |
| | | Sharing | Whether PN inventory is shared or not 1: indicates shared. | |
| | | That is, both information on a PN GW and information on a | | |
| | | PNE are shared 2: Protected. That is, only information on a | | |
| | | PN GW is shared, but information on a PNE is not shared. | | |
| | PN GW Info | It is information on a PN GW and includes PNGWID and a PN GW Name element. | | |
| | | PNGWID | | ID of a PN GW |
| | | PN GW Name | | Name of PN GW |
| | PNE Info | It is information on a PNE and can include PNEID, a PNE Name, Mode, Description, Device Capa, and Service Profile element. | | |
| | | PNE ID | | ID of a PNE |
| | | PNE Name | | Name of a PNE |
| | | Mode | | Information on mode of a PNE |
| | | Description | | Description of a PN |
| | | Device Capa | | Information on the function of a device including a PNE. |
| | | Service Profile | | Information on a CPNS-enabled application or information on content supporting specific service or state |
| Auth IniData | It is information used to start a PNE authentication procedure and can include Auth PNEID, rand_PNE, and LocalEUKeyAssignment. | | | |
| | Auth PNEID | | ID of a target PNE that should be authenticated | |
| | | | | by a CPNS server |
| | rand_PNE | | | Random value generated by a PNE |
| | LocalEUKeyAssignment | | | Flag indicating the necessary of LocalEUKey allocation TRUE: necessary, and FALSE: unnecessary |

When the CPNS-enabled entity of the second device 120 receives the PN setup request message, it checks the Original Entity ID element in order to know who tries to generate a PN. Furthermore, the CPNS-enabled entity of the second device 120 extracts a PN ID and an Msg ID element from the message.

The CPNS-enabled entity of the second device 120 generates a PN setup response message as a response message to the PN setup request message. Concretely, the CPNS-enabled entity of the second device 120 includes a response to the PN setup request message in a Return element within the PN setup response message. If the response is successful, it is 1. If the response is unsuccessful, it is 0. Here, the PN setup request message can include a Sharing element.

The generated PN setup response message can be the same as Table 4 below.

Table 4

| ELEMENT | | DESCRIPTION | |
|---|---|---|---|
| Return | | Indicate whether a PN setup request is successful or not. 1: OK, 2: fail and the request cannot be processed by a CPNS-enabled entity, and 3: not allowed. | |
| PNlnfo | It is information on a PN and can include PNID, a description, PNGWInfo, and PNEInfo. | | |
| | PNID | ID of a PN | |
| | Description | Description of a PN | |
| | Sharing | Whether PN inventory is shared or not 1: indicates | |
| | | shared. That is, both information on a PN GW and | |
| | | information on a PNE are shared 2: Protected. That is, | |
| | | only information on a PN GW is shared, but information on | |
| | | a PNE is not shared. | |
| | PN GW Info | It is information on a PN GW and can include PNGWID and PN GW Name. | |
| | PNGWID | PN ID of a GW | |
| | PNGW Name | Name of a PN GW | |
| | PNE Info | It is information on a PNE and can include PNEID, PNEName, Mode, Description, DeviceCapa, and ServiceProfile. | |
| | | PNEID | ID of PNE |
| | | PNEName | name of PNE |
| | | Mode | Information on mode of a device |
| | | Description | Description of a PN |
| | | Device Capa | Information on the function of a device including a PNE |
| | | Service Profile | Information on a CPNS-enabled application or information on content supporting specific service or state |
| AuthlniData | It is information used to start a PNE authentication procedure and can include Auth PNEID, rand_PNE, and LocalEUKeyAssignment. | | |
| | Auth PNEID | ID of a target PNE that should be authenticated by a CPNS server | |
| | rand_PNE | Random value generated by a PNE | |
| | LocalEUKeyAssi gnment | Flag indicating the necessary of LocalEUKey allocation TRUE: necessary, and FALSE: unnecessary | |
| | Auth FinData | It is information used to by a PNE in order to authenticate a CPNS server and includes HASH. | |
| | HASH | Hash value calculated by a target PNE or PN GW | |

When the generation of the PN setup response message is completed, the CPNS-enabled entity of the second device 120 sends the generated message to the first device 110.

When a PN setup response message is received from the second device 120, the first device 110 generates a PN setup request message based on the received PN setup response message and sends the PN setup request message to the CPNS server 300.

When the CPNS server 300 receives the PN setup request message from the first device 110, it generates an authentication request message and transfers the authentication request message to the second device 120 through the first device 110.

The second device 120 sends an authentication response message to the CPNS server 300 through the first device 110.

If, as a result of the check of the authentication response message, the authentication is successful, the CPNS server 300 registers the PN information included in the PN setup request message and stores the PN information in a PN inventory.

The CPNS server 300 generates a PN setup response message and sends the PN setup response message to the first device 110.

When the first device 110 receives the PN setup response message from the CPNS server, it stores the PN information in a local PN inventory. Furthermore, the first device 110 generates a PN establishment notify message and sends the PN establishment notify message to the second device 120.

Meanwhile, a remote entity sends a service discovery request message to the CPNS server 300 in order to know services provided by the generated PN#1.

The service discovery request message can be the same as Table 5 below.

Table 5

| ELEMENT | DESCRIPTION | |
|---|---|---|
| OriginEntityID | ID of the subject that sends a service discovery request message | |
| SG Info | Service Group Information. | |
| | Service ID | Service ID |
| | Keyword | A service keyword, a service group keyword, or a |
| | | member ID |
| | Member Req | When Member Req is set as "True", it means a request for information on a member of a service group. |

When the service discovery request message is received, the CPNS server check checks elements within the message.

If information on a discovery rule, for example, a keyword element is included in the message, but information on a service provider policy is not included in the message, the CPNS server performs searches based on the request. In contrast, if information on a discovery rule, for example, a keyword element is included in the message and information on a service provider policy is included in the message, the CPNS server 300 performs searches based on the information on the discovery rule and the service provider policy. In contrast, if information on a discovery rule, for example, a keyword element is not included in the message, but only information on a service provider policy is included in the message, the CPNS server 300 searches for services based on the service provider policy. In contrast, if information on a discovery rule, for example, a keyword element is not included in the message, but information on a service provider policy is not included in the message, the CPNS server 300 searches for all available services.

Meanwhile, the CPNS server 300 checks a Sharing element based on the pieces of stored information, for example, the PN information within the local PN inventory. If information on a PNE, for example, information on the second device 120 has been set to be protected in the Sharing element and information on the second device 120 is included in the retrieved results, the CPNS server 300 sends a service discovery confirmation request message to the second device 120 through the first device 110. The second device 120 sends a service discovery confirmation response message, including a result element including a value indicative of permission or rejection based on the input or configuration information of a user, to the CPNS server 300.

If a value indicative of permission is included in the result element within the received service discovery confirmation response message, the CPNS server 300 sends a service discovery response message, including an SG info element including information on the second device 120, to the remote entity 500. If a value indicative of rejection is included in the result element within the received service discovery confirmation response message, the CPNS server 300 sends a discovery response message, including an SG info element including other pieces of information except information on the second device 120, to the remote entity 500.

The service discovery response message can be the same as Table 6 below.

Table 6

| NAME | DESCRIPTION | |
|---|---|---|
| SG Info | Service group information | |
| | SGID | ID of a service group |
| | SG Description | Description of a service group |
| | SGOwner | Entity ID information on a service group |
| | ServiceInfo | Service information on a service group |
| | ServicelD | Service ID |
| | ServiceName | Service keyword or tag |
| | Member Info | Information on service group member |
| | | PNE ID |
| | | Name |

As described above, in the third embodiment, a user can select or modify a device to be protected in a service discovery procedure that is subsequently performed.

Meanwhile, in the first to the third embodiments, it is assumed that in the state in which the second device 120 has been set to be protected in a paring procedure, a mutual discovery procedure, and a service discovery procedure, the second device 120 has geographically moved and moved to the coverage of the PN#2 in the state in which the user A carries the first device 110 and the second device 120.

In this case, the PN#1 and the PN#2 of the user A overlap with each other. That is, the first device 110 and the second device 120 of the user A 110 are included within the coverage of the PN#2.

The second device 120 has been located within the coverage of the PN#2, but only the first device 110 can perform a paring procedure, a mutual discovery procedure, and a service discovery procedure within the PN#2 because the second device 120 has been set to be protected in a paring procedure, a mutual discovery procedure, and a service discovery procedure according to the first to the third embodiments. Here, it is necessary to change mode of the CPNS-enabled entity of the second device 120 from gateway mode to another mode in order for the CPNS-enabled entity to receive service within the PN#2 because the CPNS-enabled entity of the second device 120 operates as a gateway GW. This is described below.

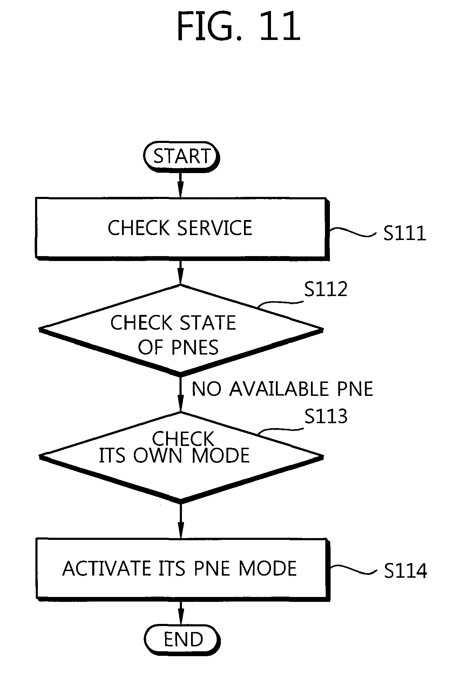

FIG. 10 shows a signal flow in which mode of a CPNS-enabled entity is changed, and FIG. 11 shows a process of changing mode of a CPNS-enabled entity.

As can be seen with reference to FIG. 10, the first embodiment shows a process in which mode of the CPNS-enabled entity of the first device 120 is changed from gateway mode to another mode.

Concretely, as can be seen with reference to FIG. 10, a user A owns a first device 110 operating as a gateway and a second device 120 operating as a PNE. It is assumed that the first device 110 is a cellular phone and the second device 120 is a portable multimedia device.

1~4) First, it is assumed that the second device 120 has been set to be protected in a paring procedure, a mutual discovery procedure, and a service discovery procedure according to the first embodiment to the third embodiment described above.

When the first device 110 and the second device 120 are located a short way off, a physical connection procedure (e.g., a physical paring procedure) is performed. A CPNS-enabled entity within the first device 110 reads out its own mode setting value and activates a gateway entity and deactivates a PNE based on the mode setting value. Likewise, a CPNS-enabled entity within the second device 120 reads out its own mode setting value and activates a PNE or deactivates a gateway entity a PNE based on the mode setting value. Next, a mutual discovery procedure is performed between the first device 110 and the second device 120. Meanwhile, the CPNS-enabled entity of the first device 110 generates a PN#1 by generating by performing a PN establishment procedure.

5) Meanwhile, it is assumed that the user A has geographically moved and moved within the coverage of a PN#2 in the state in which the user A carries the first device 110. Here, the second device 120 is located within the coverage of the PN#2, but the second device 120 may not perform a paring procedure owing to a reason, such as the protection setting.

Thus, only the first device 110 of the user A performs a physical connection with the third device 210.

6) When the physical connection is completed, the CPNS-enabled entity of the third device 210 sends a discovery request message right after the physical connection is completed if its own mode is set as a gateway. Here, if the CPNS-enabled entity within the third device 210 does not first send the discovery request message, but both the CPNS-enabled entities within the third device 210 and the first device 110 send the discovery request messages at the same time, pieces of information may overlap with each other. In order to prevent this overlapping, the third device 210 operating as a gateway sends the discovery request message right after the physical connection is completed.

Meanwhile, the discovery request message can include the following elements.

- Entitylnfo element: It includes information on a CPNS-enabled entity that sends a discovery request message.

- Userlnfo element: It includes information on the user of a CPNS-enabled entity that sends a discovery request message. The information on the user can include a user ID lower element and a user name lower element.

- PNEID element (or attribute): It is the ID of a PNE when a CPNS-enabled entity that sends a discovery request message is the PNE.

- PN GW ID element (or attribute): It is the ID of a GW when a CPNS-enabled entity that sends a discovery request message is a PN GW.

- PNE Name or PN GW Name element: It is the name of a PNE when a CPNS-enabled entity that sends a discovery request message is the PNE or it is the name of a GW when a CPNS-enabled entity that sends a discovery request message is a PN GW.

- Mode element (or attribute): It is information on activated mode of a CPNS-enabled entity that sends a discovery request message, and the information has a value indicative of a PNE or a PN GW. If activated mode of the CPNS-enabled entity is a PNE, it has a value of 1. If activated mode is a PN GW, it has a value of 2. In FIG. 10, a value of 2 is included because the CPNS-enabled entity of a third device has been set as a gateway.

- PN Info Req element (or attribute): It has a true value or false value, and a true value is included in the PN Info Req element (or attribute) when a CPNS-enabled entity that sends a discovery request message wants to obtain information on a PN stored by an entity that will receive the discovery request message.

- UI Capabilities element (or attribute): It has a true value when a PN GW has to perform a user interaction instead of a PNE. The UI Capabilities element (or attribute) is set by a PNE. For example, when a PNE does not have a user interface, the UI Capabilities element (or attribute) can be set as a true value if a PN GW instead has to perform an interaction with a user.

- Zone based service support element (or attribute): It is set as "true" when a PN GW can provide zone-based service.

- PN Info element: It is an element that is included when a CPNS-enabled entity that sends a discovery request message is a PN GW. The PN Info element includes a PN ID lower element, a PNE Info lower element, etc. If a PN is already present, the PN ID lower element indicates an ID for the PN. If a PN is already present, the PNE Info lower element includes information on a PNE that belongs to the PN. The PNE info lower element includes a PNE ID element and a PNE Name element. The above-described discovery request message can be the same as Table 1 described above.

After the discovery request message is generated as described above, the gateway sends the message to devices described through the physical connection. The discovery request message can be transmitted in a broadcast manner.

7) Thus, as illustrated in detail with reference to FIG. 11, the CPNS-enabled entity of the first device 110 checks a provided service by checking an element, for example, Zone based service support within the received discovery request message (S111). If the provided service is desired by the user A, the CPNS-enabled entity of the first device 110 performs the following procedure.

Furthermore, the CPNS-enabled entity within the first device 110 checks mode of a counterpart that has sent the message through the Mode element based on the received message and checks the ID of the counterpart through the EntityInfo element.

8~9) The CPNS-enabled entity of the first device 110 checks the state of PNEs that belong to the PN#1 (S112). If, as a result of the check of the state of the PNEs, there is no PNE which can use service provided by the PN#2, the CPNS-enabled entity of the first device 110 checks its own mode (S113). Here, the meaning that there is no PNE which can use service provided by the PN#2 may mean that all the PNEs are located within the coverage of the PN#1, but all the PNEs have been set to be protected. Or, the meaning that there is no PNE which can use service provided by the PN#2 may mean that all the PNEs are located within the coverage of the PN#1, but any one of all the PNEs is not located within the coverage of the PN#2. Or, the meaning that there is no PNE which can use service provided by the PN#2 may mean that one or more of all the PNEs are located within the coverage of the PN#1 and the coverage of the PN#2, but there is no PNE capable of communication in the PN#2 due to the shortage of a battery, power-off, a difference in a communication method, etc.

Here, whether there is a PNE which can use service provided by the PN#2 or not, as a result of the check of the state of the PNEs, can be determined with reference to Table 7 below.

Table 7

| Present in the overlapping area of coverage of PN#1 and coverage of PN#2 | Within the coverage of PN#1, but out of the coverage of PN#2 | Result of determination |
|---|---|---|
| [Available PNE present | PNE present | Need to change mode |
| Available PNE present | No PNE | No need to change mode |
| No available PNE | PNE present | Need to change mode |
| No available PNE | No PNE | No need to change mode |

10) If, as a result of the check of its own mode, the CPNS-enabled entity of the first device 110 can operate as a PNE as well as a gateway, the PNE is activated (S114). When the PNE is activated, both gateway mode and PNE mode are activated. As described above, the simultaneous activation of the two types of mode is called both modes. Or the simultaneous activation of the two types of mode is called combined mode.

11) Meanwhile, if mode of the checked counterpart is a GW, it is determined that a discovery request message is not transmitted additionally and a discovery response message is generated.

Here, if the CPNS-enabled entity of the first device 110 has activated not only the gateway, but also the PNE, mode information within the discovery response message for the discovery request message, for example, an entity discovery response message is set as both modes or combined mode and transferred.

- Entity Info element: It is information on a CPNS-enabled entity that has received a discovery request, and the Entity Info element includes a user ID lower element and a user name lower element.

- PNE ID element: It includes the ID of a PNE when a CPNS-enabled entity that has received the discovery request is the PNE.

- PNE Name element: It includes the name of a PNE when a CPNS-enabled entity that has received the discovery request is the PNE.

- Mode element: It is set as both modes or combined mode.

- UI Capa element: It has a true value when a PN GW performs a user interaction instead of a PNE. The UI Capa element is set by a PNE. For example, if a PNE does not have a user interface and a PN GW instead performs a user interaction with a user, the UI Capa element can be set to a true value.

- PN Info element: If the value of a PN Info Req element within the received discovery request message is set as true, the PN Info element is included. If the value of the PN Info Req element within the received discovery request message is set as true, the first device 110 operating as a PNE includes information on the PN#1, already configured along with the second device 120, in the PN Info element. The PN Info element can include a PN ID element, a Description element, etc. in its lower level.

- PNE Info element: It includes information on members of a PN.

The above-described discovery response message can be the same as Table 2 described above.

Meanwhile, as described above, a third device 210 which has checked that the CPNS-enabled entity of the first device 110 operates in both mode or combined mode in which the CPNS-enabled entity of the first device 110 operates as a PNE as well as a gateway starts a PN#2 setup procedure in order to join the first device 110 in its PN#2. Particularly, the following procedure is performed.

12) The CPNS-enabled entity of the third device 210 sends a PN setup request message to the first device 110. Here, the PN setup request message can include information on the gateway and information on entities that will belong to a PN to be generated (e.g., the CPNS-enabled entity within the first device).

13) When a PNE receives the PN setup request message from the CPNS-enabled entity of the first device 110, the PNE checks an Origin Entity ID element in order to know who tries to generate a PN. Furthermore, the PNE extracts a PN ID and an Msg ID element from the message.

Furthermore, the CPNS-enabled entity operating as a PNE within the first device 110 generates a PN setup response message as follows.

First, the CPNS-enabled entity operating as a PNE includes a response to the PN setup request message in a Return element within the PN setup response message. The response is 1 in the case of success and 2 in the case of failure. Next, the CPNS-enabled entity operating as a PNE includes a PN Info element for information on the PN, owned by the CPNS-enabled entity of the first device 110, in the PN setup response message. Next, the CPNS-enabled entity operating as a PNE includes information on PNEs belonging to the PN, owned by the CPNS-enabled entity of the first device 110, in a PNE Info element within the PN setup response message. Furthermore, the CPNS-enabled entity operating as a PNE includes some elements in the PN setup response message.

When the generation of the PN setup response message is completed, the CPNS-enabled entity of the first device sends the generated message to the third device 210.

14) When the CPNS-enabled entity of the third device 210 receives the PN setup response message, it checks the Return element within the received message in order to check whether the first device wants to participate in the PN. If the value of the Return element is set to 1, the CPNS-enabled entity of the third device 210 generates information on a PN inventory for the corresponding PN and generates and maintains a routing table based on the pieces of information from the received message.

Meanwhile, the CPNS-enabled entity of the third device 210 generates a PN setup request message to be transmitted to a CPNS server.

Concretely, the CPNS-enabled entity of the third device 210 includes the ID of the PN GW in the OriginEntityID element. Furthermore, the CPNS-enabled entity of the third device 210 includes information on a PN to be generated in the PN Info element of the PN setup request message. Here, the PN Info element includes a PN ID element including the ID of the PN generated by the PN GW, a Description element including a description of the generated PN, etc. Furthermore, the CPNS-enabled entity of the third device 210 includes a PN GW Info element in the PN setup request message. Here, the PN GW Info element includes a PN GW ID element indicative of the ID of the PN GW and a PN GW Name element indicative of the name of the PN GW. Furthermore, the CPNS-enabled entity of the third device 210 includes a PNE Info element and an Auth Ini Data element in the PN setup request message.

In particular, the CPNS-enabled entity of the third device 210 includes a value, indicating that the first device 110 is in both modes or combined mode, in the lower Mode element of the PNE Info element. That is, as shown in FIG. 10, in the PNE Info element, the PNE ID is set as a PNE#0 and mode=both is set.

When the generation of the PN setup request message is completed as described above, the CPNS-enabled entity of the third device 210 sends the generated PN setup request message to the CPNS server 300.

15) When the CPNS server 300 receives the PN setup request message from the third device 210, it generates an authentication request message and transfers the authentication request message to the first device 110 through the third device 210.

16) The first device 110 sends an authentication response message to the CPNS server 300 through the third device 210.

If, as a result of the check of the authentication response message, the authentication is successful, the CPNS server 300 registers the PN information included in the PN setup request message and stores the PN information in a PN inventory.

17) The CPNS server 300 generates a PN setup response message and sends the PN setup response message to the third device 210.

18) When the third device 210 receives the PN setup response message from the CPNS server, the third device 210 stores the PN information in a local PN inventory. Furthermore, the third device 210 generates a PN establishment notify message and sends the PN establishment notify message to the first device 110.

Meanwhile, when the setup of the PN#2 is completed through the above procedure, an application server 400 can obtain information on the PN#2 from the CPNS server 300. If there is service data, the application server 400 can determine the first device 110 or the second device 120 as the destination of the service data based on the obtained information. If the second device 120 is determined as the destination of the service data, the application server 400 transfers the service data to the third device 210 operating as a gateway and the third device transfers the service data to the first device 110 operating as a PNE. When the CPNS-enabled entity operating as a PNE within the first device 110 receives the service data, the CPNS-enabled entity transfers the service data to a gateway therein, and the gateway can transfer the service data to the second device 120.

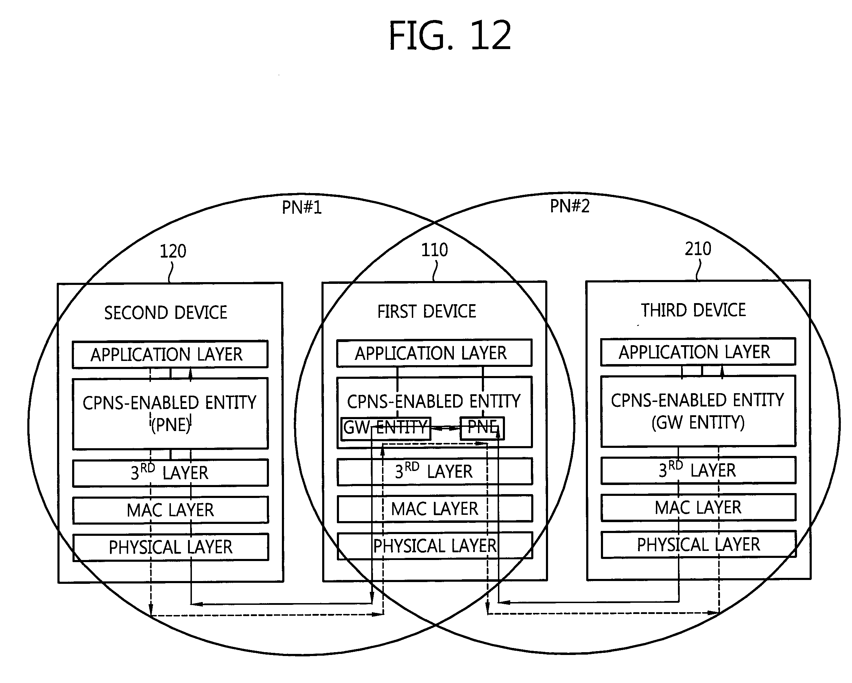

If the CPNS-enabled entity within the first device 110 operates in both modes, the gateway and the PNE operates at the same time within the CPNS-enabled entity of the first device 110 and a communication channel is set up between the gateway and the PNE, as can be seen with reference to FIG. 12. Accordingly, the CPNS-enabled entity within the first device 110 can receive the service data from the third device 210, operating as a gateway within the PN#2, as a PNE, and the CPNS-enabled entity within the first device 110 can transfer the service data to the second device 120, operating as a PNE within the PN#1, as a gateway.

More particularly, as can be seen with reference to FIG. 12, a physical layer, a MAC layer, a 3^{rd} layer, and a CPNS-enabled entity, and an application layer are present in each of the first, the second, and the third devices 110, 120, and 130. Here, the CPNS-enabled entity of the second device 120 drives only a PNE, and the CPNS-enabled entity of the third device 210 drives only a gateway entity. In contrast, when mode of the CPNS-enabled entity of the first device 110 is changed into both modes or combined mode, the CPNS-enabled entity of the first device 110 drives both a PNE and a gateway entity. Furthermore, as shown, a communication link is generated between the PNE and the gateway entity within the CPNS-enabled entity of the first device 110.

Accordingly, as indicated by a thick solid line in FIG. 12, service data is transferred to the first device 110 via the CPNS-enabled entity, the 3^{rd} layer, the MAC layer, and the physical layer of the third device 210. When the first device 110 receives the service data, the service data is transferred to the PNE of the CPNS-enabled entity via the physical layer, the MAC layer, and the 3^{rd} layer, and the PNE transfers the service data to the gateway entity through the generated communication link. A gateway entity within the CPNS-enabled entity of the first device 110 transfers the service data to the second device 120 through the third layer, the MAC layer, and the 3^{rd} layer.

Meanwhile, synchronization needs to be adjusted in order for the CPNS-enabled entity within the first device 110 to communicate with the third device 210, operating as the gateway, as a PNE and, at the same time, communicate with the second device 120, operating as the PNE, as a gateway as described above.

In other words, the CPNS-enabled entity within the first device 110 has to communicate with two devices, that is, the third device 210 and the second device 120 at the same time. If the CPNS-enabled entity within the first device 110 is not synchronized with the two devices, communication with one device may function as interference with communication with the other device. For example, a signal transmitted from the third device 210 to the first device 110 may function as interference with the second device 120. Likewise, a signal transmitted from the second device 120 to the first device 110 may function as interference with the third device 210.

In order to avoid this interference, the synchronization of a communication link between the first device 110 and the second device 120 needs to be adjusted again depending on the synchronization of the communication link between the third device 210 and the first device 110.

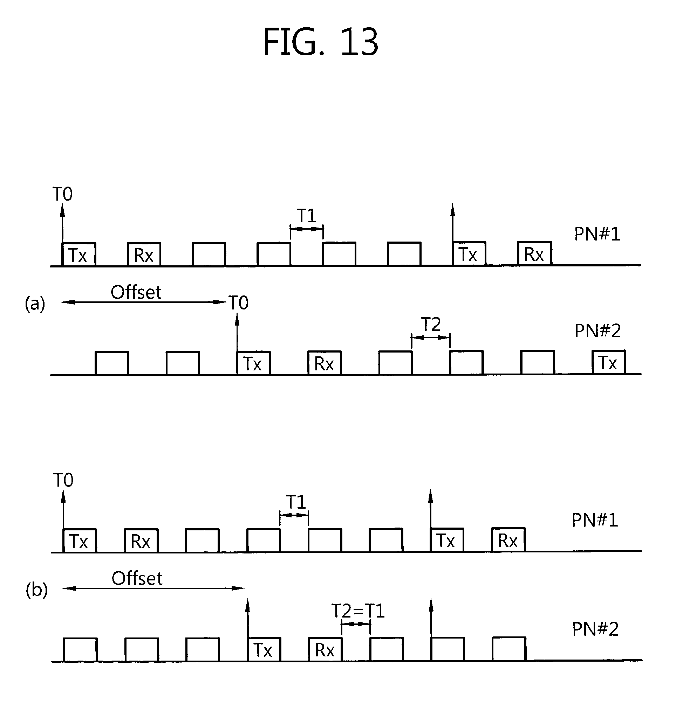

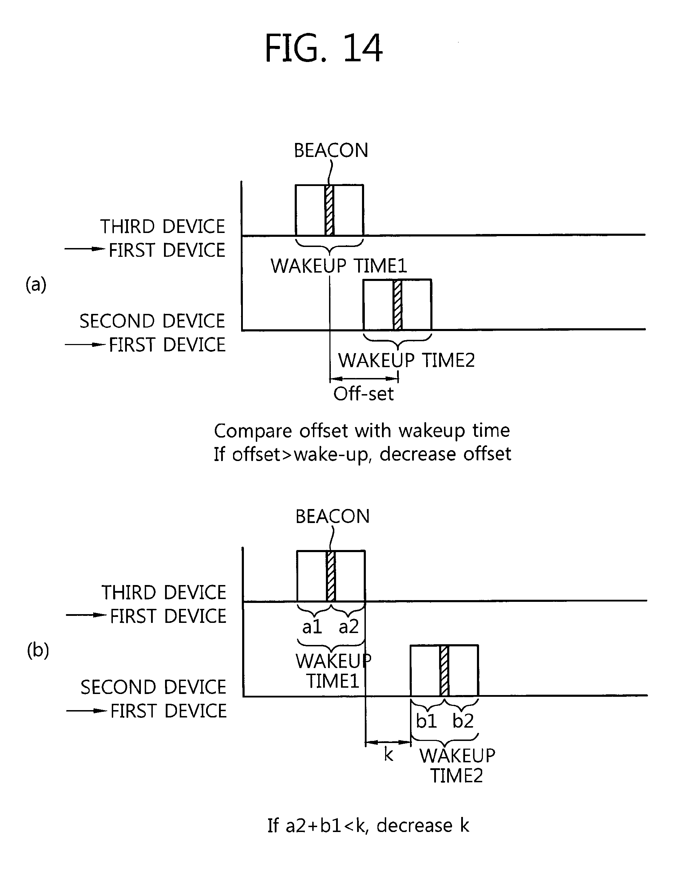

A detailed description is given with reference to FIGS. 13 and 14.

FIG. 13 shows an example in which synchronization is adjusted after mode of a CPNS-enabled entity is changed.

The cycles of transmission Tx and reception Rx in a PN#1 consisting of a first device 110 and a second device 120 are shown on the upper side of FIG. 13(a), and the cycles of transmission Tx and reception Rx in a PN#2 consisting of the first device 110 and a third device 130 are shown on the lower side of FIG. 13(a). Furthermore, as can be seen with reference to FIG. 13(a), an idle time T2 in the PN#2 can be longer than an idle time T1 in the PN#1.

Accordingly, a signal subject to the transmission Tx from the third device 210 to the first device 110 in the PN#2 can function as interference with the second device 120 in the PN#1.

In order to solve a mismatch between synchronizations as described above, the first device 110 can measure a start point T0 in a link with the third device 210. Furthermore, the first device 110 can measure can measure one or more of the cycle of the transmission Tx with the third device 210, the cycle of the reception Rx with the third device 210, and the idle time between the transmission Tx and the reception Rx.

Thereafter, the first device 110 can send a control signal for adjusting synchronization with the second device 120 to the second device based on one or more of the measurement results. Here, the control signal can include one or more of the measurement results.

Thus, the second device 120 can adjust synchronization with the first device 110 based on the control signal.

When the readjustment of the synchronization is completed as described above, the idle times T1 and T2 can have the same length as shown in FIG. 13(b). Furthermore, each of the transmission cycles Tx and the reception cycles Rx can be matched with each other.

FIG. 14 shows another example in which synchronization is adjusted after mode of a CPNS-enabled entity is changed.

As can be seen with reference to FIG. 14(a), an operation of a first device 110 receiving data from a third device 210 is shown on the upper side, and an operation of the first device 110 receiving data from the second device 120 is shown on the lower side. Here, the time that the first device 110 takes to supply power to an internal receiver in order to receive a beacon signal from the third device 210 is indicated by a wakeup time1. Likewise, the time that the first device 110 takes to supply power to the internal receiver in order to receive a beacon signal from the second device 120 is indicated by a wakeup time2.

As shown, the first device 110 has to supply power to the receiver during the wakeup time1 and the wakeup time2 in order to receive the beacon messages.

Accordingly, if the time taken to supply power to the receiver can be reduced, power can be used more efficiently.

To this end, the first device 110 compares an offset between a point of time at which it receives the beacon signal from the third device 210 and point of time at which it receives the beacon signal from the second device 210 with the wakeup time1. If the offset is greater than the wakeup time1, the offset can be reduced. In order to reduce the offset, the first device 110 can send a control signal to the second device 120.

Meanwhile, like in FIG. 14(b), it is assumed that the time that the first device 110 takes to supply power to an internal receiver in order to receive a beacon signal from a third device 210 is a wakeup time1, the time until the beacon message is received from the wakeup time1 is a time a1, and the time after the beacon message is received is a time a2. It is also assumed that the time that the first device 110 takes to supply power to the internal receiver in order to receive a beacon signal from a second device 120 is a wakeup time2, the time until the beacon message is received from the wakeup time2 is a time b1, and the time after the beacon message is received is a time b2. It is also assumed that a time offset between the wakeup time1 and the wakeup time2 is k.

The first device 110 compares a time 'a2+b1' with the time value k. If, as a result of the comparison, a2+b1<k, the first device 110 decreases the time value k. In order to reduce the time value k, the first device 110 can send a control signal to the second device 120.

The aforementioned embodiments can be combined. Accordingly, each of the embodiments is not implemented only solely, but the embodiments may be implemented in combination if necessary. The combinations can be readily implemented by a person having ordinary skill in the art who reads this specification, and thus a detailed description thereof is omitted. It is however to be noted that although the combinations are not described, they are not excluded from the present invention, but should be interpreted as being included in the scope of the present invention.

The aforementioned embodiments and modified examples can be implemented by way of a variety of means. For example, the embodiments of the present invention can be implemented by hardware, firmware, software, or a combination of them.

In the case of implementations by hardware, a method according to the embodiments of the present invention can be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro controllers, micro processors, etc.

In the case of implementations by firmware or software, a method according to the embodiments of the present invention can be implemented in the form of a module, a procedure, or function that performs the aforementioned functions or operations. A software code can be stored in a memory unit and driven by a processor. The memory unit can be placed inside or outside the processor, and the memory unit can exchange data with the processor by way of a variety of known means.

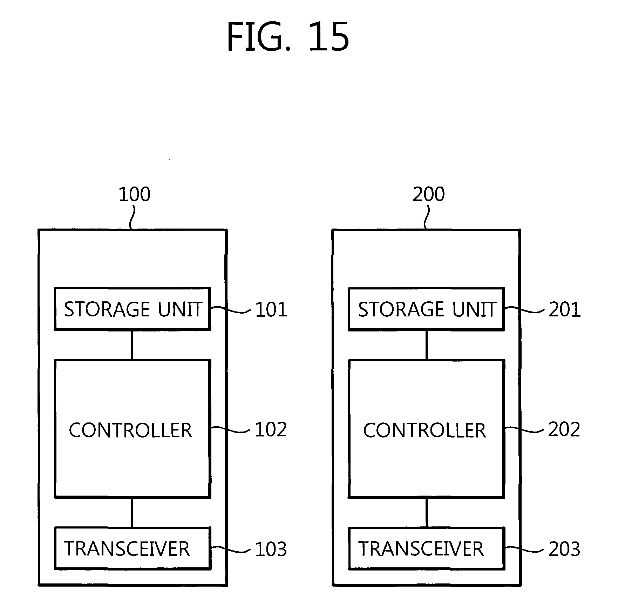

For example, the methods in accordance with the present invention can be stored in a storage medium (e.g., internal memory, flash memory, or a hard disk) and can be implemented by codes or instructions within a software program capable of being executed by a processor (e.g., a micro processor). This is described below with reference to FIG. 15.

FIG. 15 is a block diagram of a device in accordance with the embodiments of the present invention.

As shown in FIG. 15, a first device 100 includes storage means 101, a controller 102, and a transceiver unit 103.

The storage means 101 stores the methods shown in FIGS. 2 to 14.

The controller 102 controls the storage means 101 and the transceiver unit 103. Particularly, the controller 102 executes the methods stored in the storage means 101. Furthermore, the controller 102 sends the above-described signals through the transceiver unit 103.

The aforementioned embodiments are results in which the elements and characteristics of the present invention are combined in a specific form. Each of the elements or characteristics has to be considered to be optional unless otherwise described explicitly. Each of the elements or characteristics can be implemented in such a way as not to be combined with another element or characteristic. Furthermore, some of the elements and/or the characteristics may be combined to form an embodiment of the present invention. Order of the operations described in the embodiments of the present invention can be changed. Some of the elements or characteristics of one embodiment can be included in the other embodiment or can be replaced with corresponding elements or characteristics of the other embodiment. It is evident that in the claims, an embodiment can be constructed by combining claims not having an explicit citation relation or can be included as a new claim by amendments after an application.

The present invention can be materialized in a specific form without departing from the spirit and essential characteristics of the present invention. Accordingly, the detailed description should not be construed as being limited from all aspects, but should be considered to be being illustrative. The scope of the present invention should be determined by reasonable analysis into the attached claims, and all changes within an equivalent range of the present invention fall within the scope of the present invention. Furthermore, in the claims, an embodiment can be constructed by combining claims not having an explicit citation relation or can be included as a new claim by amendments after an application.

## Claims

1. A method of communicating with another device, performed by a communication device including a Converged Personal Network Service (CPNS)-enabled entity, the method comprising:
receiving, at the CPNS-enabled entity of the communication device which is set in gateway mode, a discovery response message, comprising first information indicating that mode of a first device has been set as a Personal Network Entity (PNE) and second information indicating whether the first device should be protected in an additional discovery procedure or not, from the first device, wherein the CPNS-enabled entity manages a first network, and wherein at least one Personal Network Entity (PNE) capable of receiving first service through the CPNS-enabled entity set in the gateway mode is present within the first network;
receiving a discovery request message, comprising third information indicating mode of a second device, from the second device if the communication device has moved within a coverage of a second network managed by the second device; and
determining whether to change mode of the CPNS-enabled entity of the communication device based on at least one of whether or not there is an available PNE among the at least one PNE, the mode of the second device, and the second information,
wherein if there is no PNE present outside the coverage of the second network, and the first device has been set to be protected in the additional discovery procedure, the mode of the CPNS-enabled entity is changed from the gateway mode to combined mode.

2. The communication method of claim 1, wherein the combined mode is mode in which a device performs in the gateway mode and PNE mode simultaneously.

3. The communication method of claim 1, wherein the available PNE is a PNE which is located within the coverage of the second network and which supports a communication method of the second network and has power enough to receive service from the second network.

4. The communication method of claim 1, wherein the step of the determination further comprises the step of the CPNS-enabled entity checking its own mode information.

5. The communication method of claim 4, wherein if, as a result of the check of its own mode information, the CPNS-enabled entity can perform in the gateway mode and PNE mode simultaneously, the mode of the CPNS-enabled entity is changed into the combined mode.

6. The communication method of claim 1, wherein if all PNEs are present within the coverage of the second network, the mode of the CPNS-enabled entity is determined to be changed from the gateway mode to PNE mode or determined not to be changed.

7. The communication method of claim 1, further comprising the step of transmitting a discovery response message to the second device in response to the discovery request message.

8. The communication method of claim 7, wherein the discovery response message comprises mode information indicating that the first device operates in the combined mode.

9. The communication method of claim 7, wherein if it is checked that the first device should be protected in the additional discovery procedure based on the second information, the discovery response message includes information on other PNEs except the first device.

10. The communication method of claim 1, further comprising the steps of:
receiving, by the CPNS-enabled entity, service data of the second network from the second device as a PNE after changing into the combined mode; and
transferring, the CPNS-enabled entity, the service data to the second device as a gateway.

11. A communication device, comprising:
a storage unit for storing a Converged Personal Network Service (CPNS)-enabled entity set in gateway mode, wherein the CPNS-enabled entity manages a first network, and wherein at least one Personal Network Entity (PNE) capable of receiving first service through the CPNS-enabled entity set as the gateway mode is present within the first network;
a transceiver unit for:
receiving a discovery response message, comprising first information indicating that mode of a first device has been set as a PNE and second information indicating whether the first device should be protected in an additional discovery procedure or not, from the first device when the communication device is located within the first network; and
receiving a discovery request message, comprising third information indicating mode of a second device, from the second device after the communication device has moved within a coverage of a second network managed by the second device; and
a control unit for determining whether to change mode of the CPNS-enabled entity of the communication device based at least one of whether or not there is an available PNE from among the one or more PNEs, the mode of the second device, and the second information,
wherein if there is no PNE present outside the coverage of the second network, but the first device has been set to be protected in the additional discovery procedure, the mode of the CPNS-enabled entity is changed from the gateway mode to combined mode.

12. The communication device of claim 11, wherein the combined mode is mode in which a device performs in the gateway mode and PNE mode simultaneously.

13. The communication device of claim 11, wherein the combined mode is mode in which a device performs in the gateway mode and PNE mode simultaneously.

14. The communication device of claim 11, wherein the transceiver unit transmits a discovery response message to the second device in response to the the discovery request message.

15. The communication device of claim 14, wherein if it is checked that the first device should be protected in the additional discovery procedure based on the second information, the discovery response message includes information on other PNEs except the first device.
